# EUROPEAN PATENT APPLICATION

(11) **EP 1 228 831 A1**
(43) Date of publication of application: **07.08.2002**
(21) Application number: 01116006.6
(22) Date of filing: 02.07.2001
(51) Int. Cl.: B23C 5/10

(54) **Hemispherical insert for milling cutters**

(30) Priority: 31.01.2001 IT GE010009
(71) Applicant: Mondial Tools S.p.A., 16151 Genova (IT)
(72) Inventor: Pividori, Alessandro, 25125 Brescia (IT)
(74) Representative: Porsia, Attilio, Dr.

(57) **Abstract**

Hemispherical insert for milling machines, provided with two cutting edges (201, 301) which are symmetrical about the axis of rotation (20) and about the mid-line plane (30) of the said insert, characterized in that each cutting edge (201, 301) comprises a lateral portion (211, 311), lying on a plane (241, 341) parallel to the mid-line plane (30) of the insert and different from the latter, and a polar portion (221, 321), in the proximity of the axis of rotation (20) of the insert, lying on a plane (251, 351) which links the plane (241, 341) of the said lateral portion (211, 311) with the mid-line plane (30) of the insert, an interruption of continuity (101) being provided between the said two cutting edges (201, 301) on the axis of rotation (20) of the insert.

## Description

The present invention relates to milling machines with cutting inserts, and particularly to a hemispherical insert for these milling machines.

The term "hemispherical insert" is taken to mean an insert provided on its essentially circular periphery with two cutting edges which operate in succession as a result of the rotation of the milling head in which the device is inserted. These milling machines are mainly used for copying operations.

There are known inserts of this type made with two perfectly symmetrical cutting edges, with a cutting angle constant over the whole profile of the cutting edge, and with a top rake of zero degrees which is also constant for both cutting edges. The two cutting edges converge at a vertex coinciding with the axis of rotation of the insert; this vertex has a zero cutting velocity and consequently, in the axial penetration stages, the area close to this vertex is easily fractured or deformed, which decreases the efficacy of the insert.

Another insert, described in the document EP-A-0216064, also provides two symmetrical converging cutting edges, but a non-cutting portion is provided in place of the vertex described above in their area of convergence. This type of insert can be suitable for semi-roughing or pre-finishing machining, but is not convenient for finishing operations. This is because, although a larger chip removal void is created than in the previously described solution, the presence of the non-cutting portion has a strongly negative effect.

A different solution has proposed a hemispherical insert formed from two symmetrical halves, each provided with its own cutting edge, and brought together in such a way that cutting edges are made symmetrical and convergent. This type of construction eliminates the previously encountered problem of the non-cutting portion at the vertex, by generating instead a considerably larger chip removal void. However, this insert has certain drawbacks which cannot be ignored; in the first place, since it is made in two pieces, its dimensions cannot be small; furthermore, its configuration provides a markedly negative top rake, which improves its performance at the finishing stage.

The document IT-B-1288224 describes a hemispherical insert provided with two further cutting edges located in an aperture formed centrally with respect to the two main cutting edges, on the opposite sides of the said aperture. This configuration should theoretically provide considerably improved performance both in penetration, since an effectively cutting portion is substituted for a vertex with zero cutting velocity or a non-cutting portion, and in finishing, since its two main cutting edges have a zero top rake. In practice, the difficulties associated with the maintenance of the secondary cutting edges make this solution rather impracticable.

The object of the present invention is therefore to provide a hemispherical insert for milling machines which has an efficient chip removal void and which at the same time does not have non-cutting portions at the vertex and is provided with a top rake which is not such as to compromise the operating properties of the insert, particularly at the finishing and extra finishing stages.

The present invention therefore provides a hemispherical insert for milling machines provided with two cutting edges which are symmetrical about the axis of rotation and about the mid-line plane of the said insert, characterized in that each cutting edge comprises a lateral portion, lying on a plane parallel to the mid-line plane of the insert and different from the latter, and a polar portion, in the proximity of the axis of rotation of the insert, lying on a plane which links the plane of the said lateral portion with the mid-line plane of the insert, an interruption of continuity being provided between the said two cutting edges on the axis of rotation of the insert.

Further advantages and characteristics will be made clear by the following detailed description of an embodiment of the insert according to the present invention, provided, by way of example and without restrictive intent, with reference to the attached drawings, in which:
Figure 1 is an elevation of a copying head which carries the insert according to the present invention;
Figure 2 is a side elevation of the insert according to the invention;
Figure 3 is a front view of the insert of Figure 2.

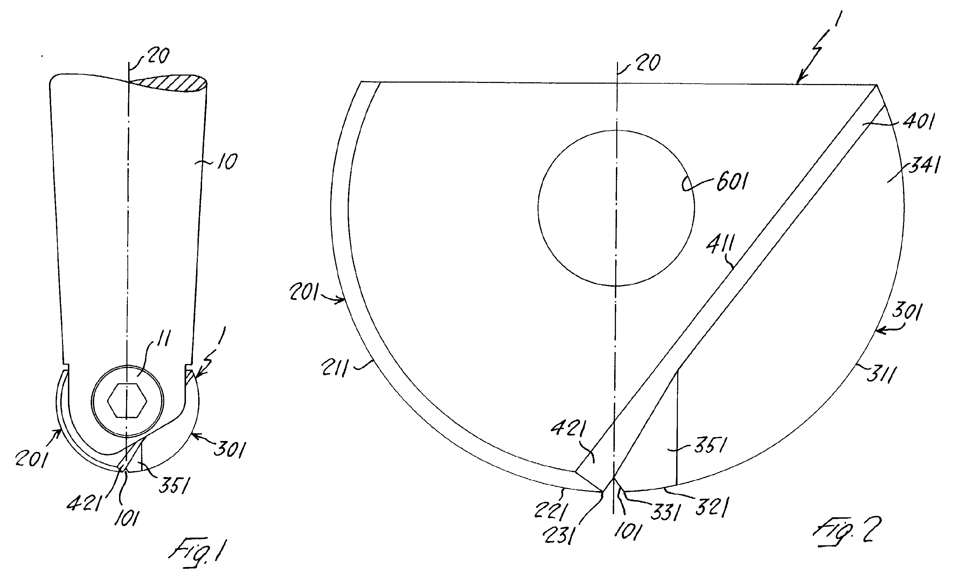

In Figure 1, the number 1 indicates the insert for a milling machine according to the present invention; this insert is mounted on a head 10 for a copying milling machine by means of a fixing bolt 11. The insert 1 is provided with two cutting edges 201 and 301 having equal and opposite cutting angles which are symmetrical about the axis 20 of rotation of the head 10. An interruption of continuity, in the form of the essentially V-shaped aperture 101, is formed between the cutting edges 201 and 301. The chip removal void, delimited by the walls 341 and 351, is also provided in the area of this aperture 401.

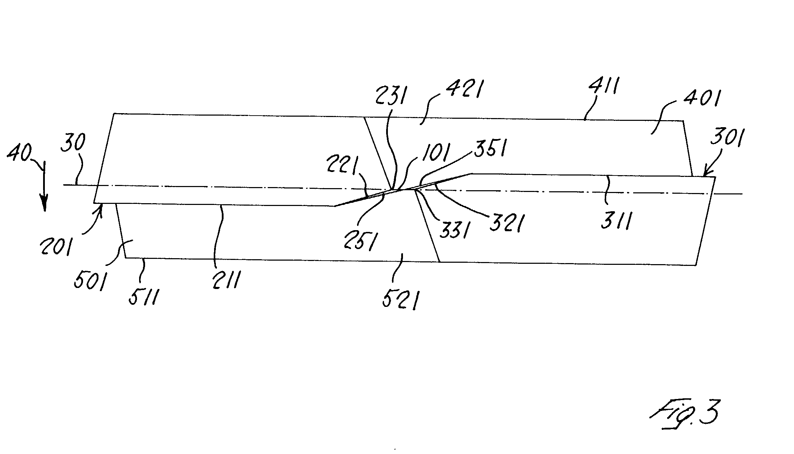

Figure 2 shows, in an enlarged view with respect to that of Figure 1, the insert 1 according to the present invention. The insert has a through hole 601 formed perpendicularly to the axis of rotation 20. The cutting edge 301 comprises a lateral portion 311, which lies on the plane 341, and a polar portion 321 in the proximity of the aperture 101, which lies on the plane 351, and which terminates at the aperture 101 in the vertex 331. The cutting edge 301 is associated with the chip breaker 411 formed on the output edge of the wall 401. The portion 421 of the wall 401, located in the proximity of the axis of rotation 20, and the plane 351 delimit a chip removal void which is formed in this area.

As stated above, the profiles of the two cutting edges 201 and 301 are perfectly symmetrical, as can be seen in Figure 3 of the attached drawings. As can be observed, only the vertices 271 and 371 of the two cutting edges lie on the theoretical mid-line plane 30 of the insert. In a similar way to what is illustrated in Figure 2, the chip breaker 511 of the cutting edge 201 is formed on the output edge of the wall 501, whose portion 521 at the end facing the aperture 101 contributes, together with the inclined wall 251, to the formation of a chip removal void. The cutting edge 201 also comprises a lateral portion 211 lying on a plane 241, parallel to the mid-line plane 30 and located after the latter with respect to the direction of rotation of the insert, indicated by the arrow 40, and a polar portion 221. This polar portion lies on the plane 251 which links the plane 241 of the lateral portion 211 of the cutting edge 201 with the mid-line plane 30 of the insert.

The operation of the insert according to the invention will be evident from the following text. In view of what is described in the attached drawings, it is clear that the proposed solution has, by comparison with the first cited example of the prior art, the consistent advantage of having a true chip removal void, delimited for the cutting edge 301 by the plane 351 and by the wall 421, and for the cutting edge 201 by the plane 251 and by the wall 521, in the area of the insert close to the axis of rotation 20; this characteristic protects the insert from compressive forces and possible fracture in this area.

This result is also achieved while avoiding the introduction of the non-cutting portion at the vertex which was a characteristic of the insert known from the document EP-A-0216064. In this case, the introduction of an interruption of continuity, represented by the V-shaped aperture 101, between the two cutting edges 201 and 301 can provide similar advantages, but without entailing the drawbacks of the earlier solution.

Moreover, the insert according to the invention has a configuration such that it can be used in the stages of finishing and extra finishing of the articles to be machined, since it does not have the strongly negative rake which is present in the third example of the known art which has been cited.

Advantageously, the design of the linking plane 351 or 251, and of the corresponding walls 421 and 521, makes it possible to machine the surfaces of the insert in a rather simple way, and to provide a sufficiently large chip removal void.

For guidance, the polar portion of each cutting edge can be of the order of 1/10 of the length of the lateral portion of the cutting edge. The ratio between the size of the interruption of continuity, in other words the aperture 101, and the total extension of the cutting edges is of the order of 1/50-1/60.

The insert can be made in a single piece, or can alternatively be formed from two separate elements which are subsequently joined together.

## Claims

1. Hemispherical insert for milling machines, provided with two cutting edges (201, 301) which are symmetrical about the axis of rotation (20) and about the mid-line plane (30) of the said insert, **characterized in that** each cutting edge (201, 301) comprises a lateral portion (211, 311), lying on a plane (241, 341) parallel to the mid-line plane (30) of the insert and different from the latter, and a polar portion (221, 321), in the proximity of the axis of rotation (20) of the insert, lying on a plane (251, 351) which links the plane (241, 341) of the said lateral portion (211, 311) with the mid-line plane (30) of the insert, an interruption of continuity (101) being provided between the said two cutting edges (201, 301) on the axis of rotation (20) of the insert.

2. Insert according to Claim 1, in which the said plane (241, 341), on which the said lateral portion (211, 311) of the said cutting edge (201, 301) lies, is located after the mid-line plane (30) with respect to the direction of rotation (40) of the said insert.

3. Insert according to Claim 1 or 2, in which the said interruption of continuity between the said cutting edges (201, 301) comprises an essentially V-shaped aperture (101).

4. Insert according to any one of the preceding claims, in which the ratio between the length of the polar portion (221, 321) and the lateral portion (211, 311) of each cutting edge is of the order of approximately 1/10.

5. Insert according to any one of the preceding claims, in which the ratio between the interruption of continuity (101) and the total extension of the cutting edges (201, 301) is of the order of 1/50-1/60.

6. Insert according to any one of the preceding Claims 1 to 5, **characterized in that** the said insert is made in a single piece.

7. Insert according to any one of the preceding Claims 1 to 5, **characterized in that** the said insert is made in two separate pieces which are joined together in a suitable way.
